# EUROPÄISCHE PATENTSCHRIFT

(11) **EP 0 699 880 B1**
(45) Veröffentlichungstag und Bekanntmachung des Hinweises auf die Patenterteilung: **13.01.1999**
(21) Anmeldenummer: 95116848.3
(22) Anmeldetag: 25.06.1993
(51) Int. Cl.: F25B 9/02, G05D 23/19

(54) **Kühlsystem zum Abkühlen eines im Mantelhohlraum eines Dewargefässes angeordneten Sensors**
Refrigeration system for cooling a sensor situated in the jacket void of a Dewar vessel
Système frigorifique pour refroidir un capteur disposé dans l'espace vide de jaquette d'un vase de Dewar

(30) Priorität: 13.08.1992 DE 4226820
(43) Veröffentlichungstag der Anmeldung: 06.03.1996
(62) Teilanmeldung aus: 93110156.2
(73) Patentinhaber: Bodenseewerk Gerätetechnik GmbH, 88662 Überlingen (DE)
(72) Erfinder: Hipper, Roland, D-88662 Überlingen (DE); Reischmann, Hans-Ludwig, D-88662 Überlingen (DE); Rid, Robert, D-88677 Markdorf (DE)
(74) Vertreter: Weisse, Jürgen, Dipl.-Phys. Patentanwalt

(56) Entgegenhaltungen:
- WO-A-89/07365
- DE-A- 4 005 670
- GB-A- 2 193 799
- GB-A- 2 250 085
- US-A- 4 617 593
- US-A- 4 755 676
- US-A- 4 786 809
- US-A- 4 904 090
- PATENT ABSTRACTS OF JAPAN vol. 16, no. 147 (P-1336), 13.April 1992 & JP-A-04 002929 (MINOLTA CAMERA)

## Beschreibung

### Technisches Gebiet

Die Erfindung betrifft ein Kühlsystem zum Abkühlen eines im Mantelhohlraum eines Dewargefäßes angeordneten Sensors auf tiefe Temperaturen mittels eines Joule-Thomson-Kühlers mit einer Expansionsdüse, bei welchem ein elektrischer Temperatursensor vorgesehen ist, der unmittelbar auf die Temperatur des Kühlobjektes anspricht und bei welchem der Durchfluß durch die Expansionsdüse mittels eines Drossel körpers regelbar ist, der von einem Stellglied temperaturabhängig verstellbar ist, das von dem elektrischen Temperatursensor steuerbar ist im Sinne einer Erhöhung des Durchflusses bei Erhöhung der Temperatur des Kühlobjektes über einen Sollwert hinaus, wobei der Temperatursensor in den Sensor implementiert ist.

### Zugrundeliegender Stand der Technik

Durch die GB-A-1 238 470 ist ein in einem Dewargefäß vorgesehener Joule-Thomson-Kühler mit einer Expansionsdüse bekannt, bei welchem der Durchfluß durch die Expansionsdüse mittels eines Drosselkörpers regelbar ist. Der Drosselkörper ist von einem Stellglied mit einer Betätigungsstange und einem Balgen temperaturabhängig verstellbar. Die Temperatur des Kühlobjektes wird von einem thermoelektrischen Temperatursensor gemessen. Dieser Temperatursensor ist durch Leitungen mit einem außerhalb des Dewar-gefäßes befindlichen Vorverstärker verbunden. Das Stellglied ist von diesem Temperatursensor über den Vorverstärker und einen Regler steuerbar, der über ein elektropneumatisches Ventil den Druck auf der Außenseite des Balgens beeinflußt.

Die GB-A-2 193 799 beschreibt einen Kühler, bei welchem Mittel zur Messung der Temperatur an oder wenigsten angrenzend an der thermischen Last vorgesehen sind. Von diesen Mitteln zur Messung der Temperatur wird über einen Regler die Zufuhr von Kühlmittel geregelt.

Die US-A-3 942 010 beschreibt eine gekühlte Infrarot-Detektorvorrichtung. Zur Kühlung eines Infrarotsensors ist ein Joule-Thomson-Kühler in einem Dewar-Gefäß angeordnet. Der Infrarotsensor ist an einem vorderen Ende des Dewar-Gefäßes angeordnet. Zwischen diesem vorderen Ende des Dewar-Gefäßes und dem vorderen Ende des Joule-Thomson-Kühlers ist eine Dichtung aus flüssigkeitabsorbierendem Material vorgesehen. Die elektrische Verbindungen zu dem Infrarotsensor bestehen aus Leiterbahnen, welche sich nach hinten entlang der Innenfläche des inneren Seitenwandes des Dewar-Gefäßes erstrecken. An dem hinteren Ende des Joule-Thomson-Kühlers befindet sich ein Zapfen. Das dem Joule-Thomson-Kühler abgewandte Ende des Zapfens dient zur Befestigung eines Temperaturfühlers. Über einen Regelkreis wird der Fluß des Gases in den Joule-Thomson-Kühler in Abhängigkeit von der Temperatur des Temperaturfühlers gesteuert. Die Signale des Temperaturfühlers werden über eine gesonderte elektrische Leitung aus dem Dewar-Gefäß herausgeführt.

### Offenbarung der Erfindung

Nach dem kennzeichnenden Teil des Anspruchs 1 ist
(a) zum Herausführen der Signale des Sensors aus dem Mantelhohlraum ein Multiplexer mit einer Signalleitung für Sensorsignale vorgesehen, und
(b) die Signale des Temperatursensors sind durch den Multiplexer auf die Signalleitung der Sensor-Signale mit übertragbar.

Ausgestaltungen der Erfindung sind Gegenstand der abhängigen Ansprüche.

### Kurze Beschreibung der Zeichnungen

Ausführungsbeispiele der Erfindung sind nachstehend unter Bezugnahme auf die zugehörigen Zeichnungen näher erläutert.
- Fig. 1: zeigt eine Ausführung eines Kühlsystems für einen infrarotempfindlichen Sensor teilweise im Schnitt.
- Fig.2: zeigt die Temperaturregelung bei dem Kühlsystems von Fig.1.
- Fig.3: zeigt schematisch einen aus einer Anordnung von infrarotempfindlichen Detektorelementen bestehenden Sensor mit einem integrierten Multiplexer und einem Temperatursensor.
- Fig.4: zeigt eine andere Schaltung des Temperatursensors in Verbindung mit einem infrarotempfindlichen Sensor nach Art von Fig.3.
- Fig.5: zeigt eine weitere Schaltung des Temperatursensors in Verbindung mit einem infrarotempfindlichen Sensor.
- Fig.6: zeigt die Herausführung der Multiplexsignale aus dem Mantelhohlraum eines Dewar-Gefäßes und die weitere Signalverarbeitung.

### Bevorzugte Ausführungen der Erfindung

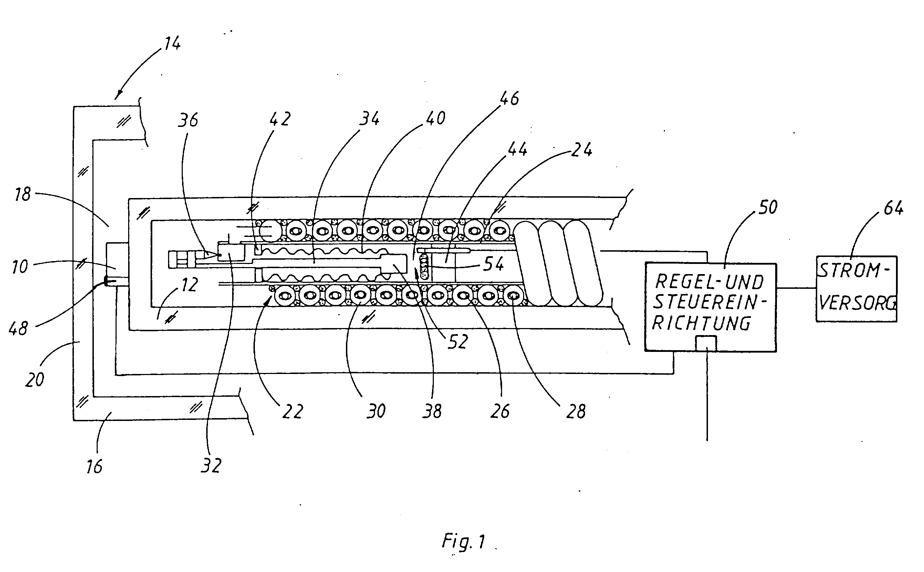

In Fig.1 ist mit 10 ein Sensor bezeichnet. Der Sensor 10 ist ein infrarotempfindlicher Sensor-Baustein mit einer Anordnung von Detektorelementen. Der Sensor 10 sitzt auf der Stirnfläche des Innenmantels 12 eines Dewar-Gefäßes 14. Der Außenmantel des Dewar-Gefäßes 14 ist mit 16 bezeichnet. Der Sensor 10 ist in dem Mantelhohlraum 18 zwischen Innenmantel 12 und Außenmantel 16 des Dewar-Gefäßes 14 angeordnet. Dieser Mantelhohlraum 18 ist evakuiert. Die Stirnfläche 20 des Außenmantels 16 bildet ein infrarotdurchlässiges Fenster.

In dem Dewar-Gefäß 14 sitzt ein Joule-Thomson-Kühler 22. Der Joule-Thomson-Kühler 22 weist ein Innenrohr 24 auf. Auf das Innenrohr 24 ist ein Wärmetauscher 26 schraubenförmig aufgewickelt. Der Wärmetauscher 26 enthält ein Rohr 28, das zur Verbesserung des Wärmeüberganges mit Rippen 30 versehen ist. Das Rohr 28 erstreckt sich von einem "warmen" Ende, rechts in Fig.1 zu einem "kalten" Ende links in Fig.1. An dem kalten Ende mündet das Rohr 28 in einer Entspannungsdüse 32. An dem warmen Ende wird in das Rohr 28 ein Arbeitsgas unter hohem Druck eingeleitet. An der Entspannungsdüse 32 wird das Arbeitsgas entspannt. Dabei kühlt sich das Arbeitsgas ab. Das entspannte und abgekühlte Arbeitsgas strömt dann im Gegenstrom durch den Wärmetauscher 26. Dabei erfolgt eine Vorkühlung des vorlaufenden Arbeitsgases. Schließlich wird eine Abkühlung auf eine sehr niedrige Temperatur erreicht. Das ist das Prinzip des üblichen Joule-Thomson-Kühlers. Der Joule-Thomson-Kühler 22 kühlt auch den Sensor 10.

Ein langgestreckter Träger 34 erstreckt sich zentral in dem Innenrohr 24 und ragt auf der Seite der Entspannungsdüse 32 aus dem Innenrohr 24 heraus. Das herausragende Ende ist J-förmig, greift über die Entspannungsdüse 32 und trägt einen Drosselkörper 36. Der Drosselkörper 36 ist gleichachsig zu der Entspannungsdüse 32 und hat ein konisches Ende, das in die Entspannungsdüse 32 ragt. Das verdickte innere Ende 38 des Trägers 34 ist mit dem Rand eines Balgens 40 verbunden. Der andere Rand des Balgens 40 ist mit einem Bund 42 verbunden, der von dem Innenrohr 24 einwärts ragt. In dem Innenrohr 24 sitzt ferner ein Stopfen 44. Der Stopfen 44, die Wandung des Innenrohres 24, der Balgen 40 und die innere Stirnfläche des Trägers 34 begrenzen eine Druckmittelkammer 46. Die Druckmittelkammer ist mit einem sich bei Temperaturerhöhung ausdehnenden Gas gefüllt. Wenn sich das in dem Wärmetauscher 26 im Gegenstrom fließende Arbeitsgas abkühlt, erfolgt durch das dünnwandige Innenrohr hindurch eine Abkühlung des Gases in der Druckmittelkammer 46. Das Gas zieht sich dann zusammen. Damit wird der Träger 34 nach rechts in Fig.1 bewegt. Der Balgen 40, der am linken Rand fest an dem Innenrohr 24 gehalten ist, wird gedehnt. Dabei wird der Drosselkörper 36 nach rechts in Fig.1 weiter in die Entspannungsdüse 32 hineinbewegt. Der Durchfluß von Arbeitsflüssigkeit durch die Entspannungsdüse wird vermindert. Dadurch wird wiederum die Kühlleistung des Joule-Thomson-Kühlers 22 vermindert. Hierdurch erfolgt eine Regelung, welche eine mittlere Temperatur des durch den Wärmetauscher 26 fließenden Arbeitsgases konstant zu halten trachtet. Dadurch wird aber noch keine Konstanz der Temperatur des Sensors 10 gewährleistet.

Aus diesem Grunde ist ein elektrischer Temperatursensor 48 vorgesehen. Der Temperatursensor 48 spricht unmittelbar auf die Temperatur des Kühlobjektes, nämlich des Sensors 10 an. Zu diesem Zweck ist der Temperatursensor 48 in den infrarotempfindlichen Sensor-Baustein oder den Multiplexer integriert. Der Temperatursensor 48 ist mit einer Regel- und Steuereinrichtung 50 verbunden. Die Regel- und Steuervorrichtung 50 steuert ein Stellglied 52, welches seinerseits die Stellung des Drosselkörpers 36 bestimmt.

Dieses Stellglied 52 umfaßt die Druckmittelkammer 46, den federnden Balgen 40 und den Träger 34 sowie zusätzlich eine in der Druckmittelkammer 46 angeordnete Heizwendel 54. Wenn die vom Temperatursensor 48 gemessene Temperatur des Sensors 10 eine gewünschte Solltemperatur überschreitet, dann wird von der Regel- und Steuereinrichtung 50 ein Heizstrom durch die Heizwendel 54 erzeugt. Dieser Heizstrom bewirkt eine Erwärmung des Gases in der Druckmittelkammer 46. Der Balgen 40 wird zusammengedrückt, und der Träger 34 wird nach links in Fig.1 bewegt. Dadurch wird die Entspannungsdüse 32 von dem Drosselkörper 36 weiter freigegeben. Der Durchfluß von sich entspannendem Arbeitsgas wird erhöht. Dadurch wird der Sensor 10 stärker gekühlt. Auf diese Weise ist der "thermisch-mechanischen" Regelschleife über den Wärmeaustausch zwischen Arbeitsgas und Gas in der Druckmittelkammer 46 eine "elektrische" Regelschleife über die Regel- und Steuereinrichtung 50 überlagert. Es wird die Temperatur des Kühlobjektes selbst geregelt.

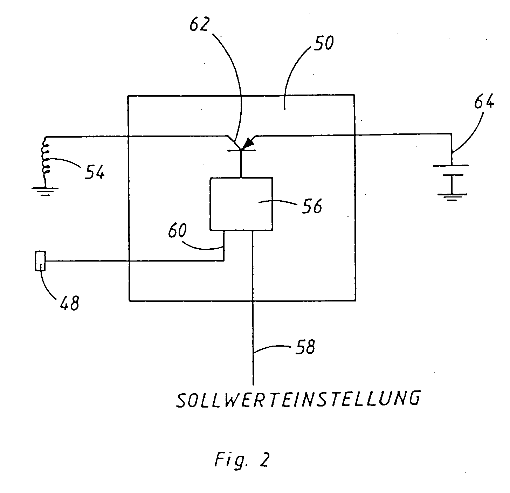

Die elektrische Regelschleife ist in Fig.2 schematisch dargestellt. Ein Regler 50 erhält einen Sollwert über einen Eingang 58. An einem Eingang 60 liegt der Temperatur-Istwert von dem Temperatursensor 48 (Fig.1). Der Regler steuert einen Transistor 62. Der Transistor 62 steuert den Strom, der von einer Stromversorgung 64 durch die Heizwendel 54 (Fig.1) geschickt wird.

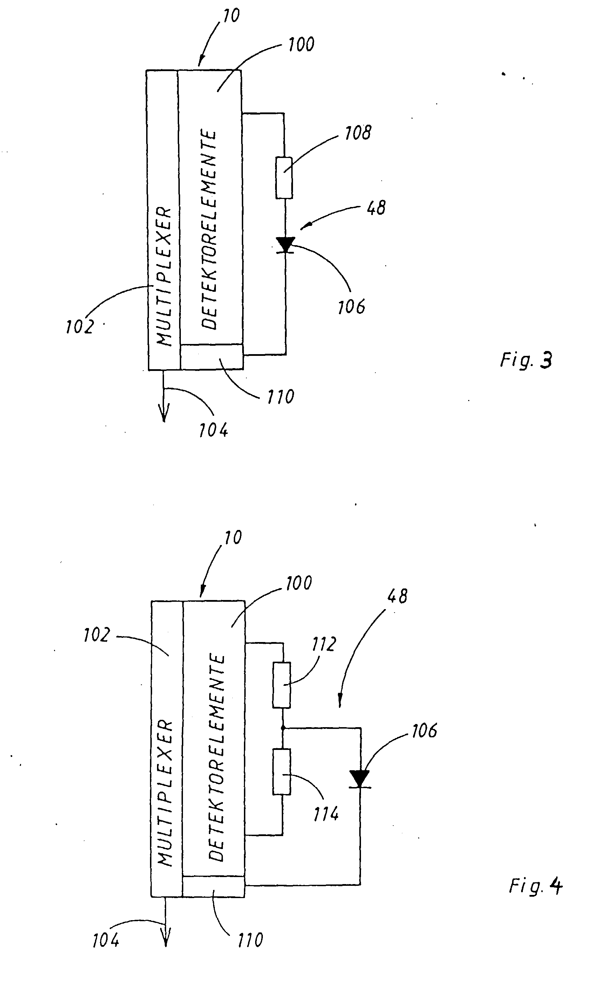

Fig.3 zeigt eine Ausführung des Sensors 10 mit dem Temperatursensor 48.

Der Sensor 10 ist ein Baustein mit einer z.B. zweidimensionalen Anordnung 100 von Detektorelementen. Auf dieser Anordnung 100 von Detektorelementen wird von einem (nicht dargestellten) optischen System ein Bild eines zu erfassenden Gesichtsfeldes erzeugt. Die Strahlungsintensitäten an den verschiedenen Detektorelementen werden integriert und gespeichert. Die gespeicherten Integrale werden durch einen Multiplexer 102 seriell auf einen Ausgang aufgeschaltet. Die Detektorelemente des Sensors 10 und der als CCD ausgebildete Multiplexer 102 sind in einem Baustein monolothisch integriert. Das ist eine bekannte Technik und daher hier nicht im einzelnen beschrieben.

An dem Sensor 10 ist ein Temperatursensor 48 angebracht. Der Temperatursensor 48 ist von einer temperaturempfindlichen Diode 106 gebildet. Die Diode 106 liegt über einen Vorwiderstand 108 an einer Referenzspannung. Die Diode ist auf eine zusätzliche Integrationszelle 110 des CCD-Bausteins aufgeschaltet. Die Integrationszelle 110 wird zusammen mit den gespeicherten Integralen der verschiedenen Detektorelemente durch den Multiplexer 102 periodisch seriell ausgelesen und auf den Ausgang geschaltet. Die zusätzliche Integrationszelle 110 verfügt im Gegensatz zu den anderen Integrationszellen nicht über eine Schaltung zur Subtraktion der Hintergrundstrahlung. Die Temperaturkennlinie muß konstant bleiben.

Fig.4 zeigt eine ähnliche Anordnung des Sensors 10 und des Temperatursensors 48. Entsprechende Teile sind in Fig.4 mit den gleichen Bezugszeichen versehen wie in Fig.3.

Die zusätzlichen Bauteile (Diode 106 etc.) können zusammen mit dem Sensor 10 und dem Multiplexer 102 zu einem Hybrid zusammengefaßt werden. Alle Bauteile können aber auch als integrierter Bestandteil des Multiplexers 102 monolithisch realisiert werden. Die Beschaltung der Diode 106 erfolgt so, daß die Spannung für den zu erfassenden Temperaturbereich den Signalspannungen der Detektorelemente entspricht.

Bei der Ausführung nach Fig.4 liegt an der Referenzspannung ein Spannungsteiler mit zwei ohmschen Widerständen 112 und 114. Eine temperaturempfindliche Diode 106 liegt an der Teilspannung zwischen den beiden Widerständen 112 und 114 an. Die Diode ist wieder auf die Integratorzelle 110 geschaltet.

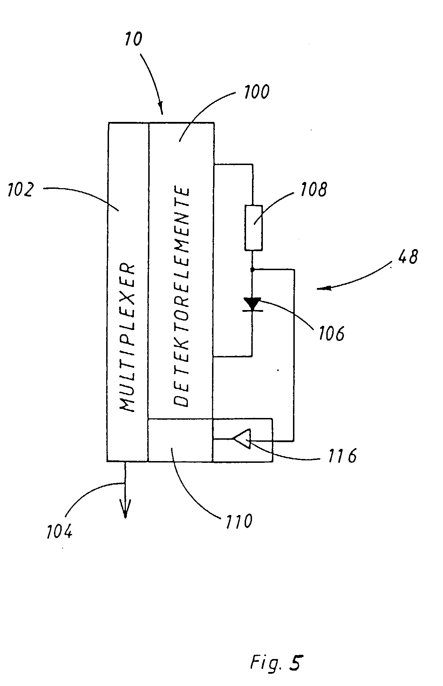

Bei der Ausführung von Fig.5 liegt die Diode 106 in Reihe mit dem Vorwiderstand 108 zwischen zwei Referenzspannungen. Zwischen Vorwiderstand 108 und Diode 106 wird eine Teilspannung abgegriffen. Diese Teilspannung ist über einen Buffer-Verstärker 116 auf die Integratorzelle 110 geschaltet. Der Buffer-Verstärker 116 ist in den Baustein integriert.

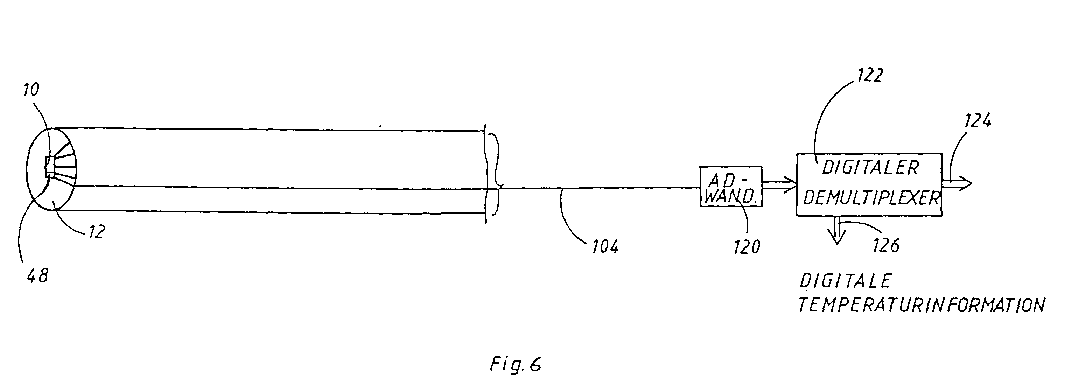

Fig.6 zeigt schematisch die weitere Signalverarbeitung.

Mit 12 ist in Fig.6 der Innenmantel des Dewar-Gefäßes bezeichnet. Auf der Stirnfläche dieses Innenmantels 12 sitzen der Sensor 10 und der Temperatursensor 48. Die Signale des Sensors 10 und des Temperatursensors 48 werden durch den Multiplexer 102 in Multiplex-Ausgangssignale umgesetzt und über eine Signalleitung 104 aus dem Mantelhohlraum 18 des Dewar-Gefäßes 14 heraus übertragen. Die Multiplex-Ausgangssignale werden durch einen Analog-Digital-Wandler Digital-Wandler 120 (A/D-Wandler) in entsprechende umgewandelt. Diese Digitalsignale sind auf einen digitalen Demultiplexer 122 geschaltet. Der Demultiplexer 122 liefert an einem Ausgang 124 Digitalsignale des Sensors 10 zur weiteren Signalverarbeitung. An einem Ausgang 126 erscheint die digitale Temperaturinformation für den Regler 56.

## Patentansprüche

1. Kühlsystem zum Abkühlen eines im Mantelhohlraum (18) eines Dewargefäßes (14) angeordneten Sensors (10) auf tiefe Temperaturen mittels eines Joule-Thomson-Kühlers (22) mit einer Expansionsdüse (32), bei welchem ein elektrischer Temperatursensor (48) vorgesehen ist, der unmittelbar auf die Temperatur des Sensors (10) anspricht und bei welchem der Durchfluß durch die Expansionsdüse (32) mittels eines Drosselkörpers (36) regelbar ist, der von einem Stellglied (52) temperaturabhängig verstellbar ist, das von dem elektrischen Temperatursensor (48) steuerbar ist im Sinne einer Erhöhung des Durchflusses bei Erhöhung der Temperatur des Kühlobjektes (10) über einen Sollwert hinaus, wobei der Temperatursensor (48) in den Sensor (10) implementiert ist,
**dadurch gekennzeichnet, daß**
(a) zum Herausführen der Signale des Sensors (10) aus dem Mantelhohlraum (18) ein Multiplexer (102) mit einer Signalleitung (104) für Sensorsignale vorgesehen ist, und
(b) die Signale des Temperatursensors (48) durch den Multiplexer (102) auf die Signalleitung der Sensor-Signale mit übertragbar sind.

2. Kühlsystem nach Anspruch 1, **dadurch gekennzeichnet, daß**
(a) der Sensor (10) eine Anordnung (100) von Detektorelementen aufweist und
(b) der Temperatursensor (48) in der Anordnung (100) der Detektorelemente implementiert ist

3. Kühlsystem nach Anspruch 2, **dadurch gekennzeichnet, daß**
(a) der Multiplexer (102) von einem CCD-Baustein gebildet ist und
(b) der Temperatursensor (48) von einer temperaturempfindlichen Diode (106) gebildet ist, deren Signal auf eine zusätzliche Integratorzelle (110) des CCD-Bausteins aufgeschaltet ist.

## Claims

1. Cooling system for cooling a sensor (10) arranged within the jacket cavity (18) of a Dewar vessel (14) down to deep temperatures by means of a Joule-Thomson cooler (22) having an expansion nozzle (32), wherein an electrical temperature sensor (48) is provided, which responds directly to the temperature of the sensor (10), and wherein the through-flow through the expansion nozzle (32) is controlled by means of a restrictor body (36), which is adjustable by an actuator (52) as a function of temperature, the actuator being controlled by the electrical temperature sensor (48) to increase the through-flow, when the temperature of the object to be cooled (10) is increased beyond a set point, the temperature sensor (48) being implemented in the sensor (10),
**characterized in that**
(a) a multiplexer (102) with a signal line (104) for sensor signals is provided for passing the signals from the sensor (10) out of the jacket cavity (18),
(b) also the signals from the temperature sensor (48) are transmitted by the multiplexer (102) to the signal line of the sensor signals.

2. Cooling system according to claim 1, **characterized in that**
(a) the sensor (10) has an array (100) of detector elements, and
(b) the temperature sensor (48) is implemented in the array (100) of the detector elements.

3. Cooling system according to claim 2, **characterized in that**
(a) the multiplexer (102) is a CCD-component, and
(b) the temperature sensor (48) is a temperature-sensitive diode (106), the signal of which is applied to an additional integrator cell (110) of the CCD-component.

## Revendications

1. Système de refroidissement destiné à refroidir un capteur (10) disposé dans l'espace creux de manteau (18) d'un vase de Dewar (14) à de basses températures à l'aide d'un refroidisseur Joule-Thomson (22) muni d'une tuyère d'expansion (32) pour lequel il est prévu un capteur de température électrique (48) répondant directement à la température du capteur (10) et pour lequel la circulation à travers la tuyère d'expansion (32) est susceptible d'être réglée à l'aide d'un dispositif d'étranglement (36) susceptible d'être déplacé en fonction de la température par un membre d'ajustage (52) susceptible d'être commandé par le capteur de température électrique (48) en vue d'une augmentation de la circulation lorsque la température de l'objet à refroidir (10) dépasse une valeur de consigne, le capteur de température (48) étant implanté dans le capteur (10),
**caractérisé par le fait que**
(a) un multiplexeur (102) muni d'une conduite de signaux (104) pour des signaux de capteur est prévu afin d'évacuer les signaux du capteur (10) hors de l'espace creux de manteau (18), et
(b) les signaux du capteur de température (48) sont susceptibles d'être transmis par le multiplexeur (102) à la conduite de signaux des signaux de capteur.

2. Système de refroidissement selon la revendication 1, **caractérisé par le fait que**
(a) le capteur (10) présente une disposition (100) d'éléments détecteurs et
(b) le capteur de température (48) est implanté dans la disposition (100) des éléments détecteurs.

3. Système de refroidissement selon la revendication 2, **caractérisé par le fait que**
(a) le multiplexeur (102) est formé d'un composant à dispositif de couplage de charge et
(b) le capteur de température (48) est formé d'une diode (106) sensible à la température dont le signal est appliqué à une cellule supplémentaire d'intégration (110) du composant à dispositif à couplage de charge.
